# EUROPEAN PATENT SPECIFICATION

(11) **EP 3 532 386 B1**
(45) Date of publication and mention of the grant of the patent: **04.01.2023**
(21) Application number: 17794706.6
(22) Date of filing: 27.10.2017
(51) Int. Cl.: B64D 11/06, B64D 47/08

(54) **MONUMENT ASSEMBLY FOR AIRCRAFT COMPRISING A CABIN MONITORING SYSTEM**
MODULANORDNUNG FÜR FLUGZEUG MIT EINEM KABINENÜBERWACHUNGSSYSTEM
ENSEMBLE D'AGENCEMENT D'AÉRONEF COMPRENANT UN SYSTÈME DE SURVEILLANCE DE CABINE

(30) Priority: 27.10.2016 US 201662413535 P
(43) Date of publication of application: 04.09.2019
(73) Proprietor: SAFRAN, 75015 Paris (FR)
(72) Inventor: SIVIGNON, Sébastien, 78370 Plaisir (FR)
(74) Representative: Plasseraud IP
(86) International application number: PCT/EP2017/077591
(87) International publication number: WO 2018/078089

(56) References cited:
- WO-A1-2015/155379
- WO-A1-2016/067168
- US-A- 4 617 750
- US-A1- 2010 253 781
- US-A1- 2013 206 906
- US-A1- 2014 196 206

## Description

The invention relates to an aircraft cabin comprising a monument assembly and a cabin monitoring system.

### -- BACKGROUND OF THE INVENTION --

For passenger transportation aircraft, regulations require that at least 80% of the passenger seats must be visible by crew attendants, including 50% within each zone or cabin area of the aircraft.

This applies to the critical phases of a flight, including taxiing, take-off and landing phases. During these critical phases, the crew attendants have to remain at respective crew attendant seats while being capable of monitoring the passenger seats in accordance with the above-cited regulation requirements. Then, these requirements lead to locate appropriately the crew attendant seats within the cabin, and to have these crew attendant seats oriented toward the zones or cabin areas to be monitored.

Due to these requirements, the locations and orientations of the crew attendant seats are to be arranged in a very limited number of locations into the aircraft.

In addition, to have crew attendant seats installed, some passenger seats may be needed to be suppressed. Moreover, it may also be needed to reduce the space between two successive rows of passenger seats.

Furthermore, crew attendant seats may be provided with complex and heavy mobile supports, particularly so that they can be stowed when not used. Such crew attendant seats are in particular in the vicinity of aircraft exit or emergency doors and cramped passages.

WO 2015/155379 discloses a monitoring system to be installed in a cabin of an aircraft or spacecraft for passenger transportation, which comprises at least one imaging device and at least one output device. Information displayed by the output device comprises indication of whether a passenger seat in the cabin is occupied or empty. For more reliable information, several types of imaging devices may be used within the system, in particular selected among a visible light camera, a near-infrared lighting source combined with a near-infrared camera, a thermal camera, and a range imaging device.

Starting from this situation, one object of the present invention consists in providing new cabin layouts for airplanes. Such new cabin layouts are aimed to allow at least an increase in the passenger seat number and/or to lessen or avoid the space reduction between two successive seat rows, and/or to reduce the overall weight loaded in the aircraft, mainly with lowering the weight contribution due the crew attendant seats.

### -- SUMMARY OF THE INVENTION --

To this aim, the invention proposes an aircraft cabin according to appended independent claim 1, comprising a new monument assembly which is designed for being fitted into an aircraft, in particular a passenger transportation aircraft, and for forming an aircraft cabin layout, specifically with respect to aircraft front and rear directions.

More particularly, it comprises at least one crew attendant seat, which is secured to the monument assembly and a cabin monitoring system, which includes at least one capturing device and at least one video display device.

The capturing device and the video display device are connected for receiving at least one image data that is produced from acquisition data provided by the one capturing device. The video display device is suitable for displaying at least one image of the aircraft cabin from the image data.

According to a first feature of the invention, the capturing device is designed to be positioned and oriented within the aircraft cabin so that it allows monitoring of at least 50%, preferably at least 80% and most preferably 100%, of the passenger seats within a zone or cabin area of the aircraft.

According to another feature of the invention, the crew attendant seat within the monument assembly does not allow crew attendants who are respectively at one crew attendant seat to monitor at least 50% of the passenger seats through direct vision. In the context of the present invention, direct vision means vision when looking in the direction of the observed scene without using any camera and display system.

Thanks to the invention, the regulation requirement about the proportion of the passenger seats which can be monitored is met.

In addition, the invention allows optimizing the position and orientation of each crew attendant seat so as to increase the passenger seat number, and/or to lessen or avoid a reduction in the gap between two successive seat rows, and/or to reduce the overall weight loaded into the aircraft, in particular the weight contribution which is due to the crew attendant seats.

The video display device is arranged fixedly near the crew attendant seat, so that the image is viewed by a crew attendant sitting on the crew attendant seat or being in the area where on the crew attendant seat is located.

The capturing device may comprise at least one amongst a visible range video camera, a near-infrared video camera, a thermal camera, a 3D-acquisition sensor set and/or a laser scanning device.

In particular embodiments of the invention, the monument assembly may form an intermediate part of the aircraft cabin layout. It may therefore include two access areas to respective lateral aircraft exit or emergency doors which are located oppositely on left and right sides on the aircraft. It may further include bulkhead portions which are perpendicular to a longitudinal aircraft direction and each close to one of the access areas. Specifically, each bulkhead portion forms a limit of the corresponding access area in an aircraft front direction. Then, for each of the left and right sides of the aircraft separately, a crew attendant seat is secured to the bulkhead portion, facing in the aircraft rear direction, and which, when in use position, extends at least partly into the access area.

Optionally for such invention embodiments, for each of the left and right sides of the aircraft separately, the access area to the corresponding lateral aircraft exit or emergency door may be comprised between two complete rows of passenger seats each extending over a full width of the aircraft cabin. As a consequence, only one passenger seat row is incomplete with respect to the full width of the aircraft cabin and which is intermediate between said complete rows of passenger seats.

In other alternative or complementary embodiments of the invention, the monument assembly may form a rear part of the aircraft cabin layout. It may include, particularly separately on left and right sides of the aircraft, at least one lavatory module and includes two access areas each to a respective lateral rear aircraft exit or emergency door. In such cabin layout, a bulkhead portion of the lavatory module, which is advantageously perpendicular to the longitudinal aircraft direction, may form a limit for the neighbouring access area in the aircraft front direction.

Then, preferably for each of the left and right sides of the aircraft separately, a rear crew attendant seat is secured to the bulkhead portion of the lavatory module, facing in the aircraft rear direction, which, when in use position, extends at least partly into the access area.

Optionally for such invention embodiments, for each of the left and right sides of the aircraft, the rear crew attendant seat may have a backrest part rigidly secured to the bulkhead portion of the neighbouring lavatory module, and a seat part connected to the bulkhead portion so that this seat part rotates about a horizontal rotation axis between a vertical stowed position and a horizontal use position. Such mobile design for crew attendant seat does not induce excessive weight increase.

Of course, different features, alternatives and/or embodiments of the present invention can be combined with each other in various arrangements to the extent that they are not incompatible or mutually exclusive of others.

These and other features of the invention will be now described with reference to the appended figures, which relate to preferred but not-limiting embodiments of the invention.

### -- BRIEF DESCRIPTION OF THE DRAWINGS --

The invention will be better understood and other features and advantages will become apparent upon reading the following detailed description including embodiments for illustrative purposes with reference to the figures, presented as non-limitative examples, which can be used to complete the understanding of the present invention and the description and, where appropriate, contribute to its definition, in which:
- Figure 1 shows a first example, not forming part of the claimed invention, of a monument assembly for an intermediate part of an aircraft cabin,
- Figure 2 shows a second example, not forming part of the claimed invention, of a monument assembly for a rear part of an aircraft cabin,
- Figure 3 shows an alternative embodiment of figure 1 for a monument assembly according to the invention, suitable for the same intermediate part of aircraft cabin as in figure 1, and
- Figure 4 shows an alternative embodiment of figure 2 for a monument assembly according to the invention, suitable for the same rear part of aircraft cabin as in figure 2.

For the sake of clarity, element sizes which appear in these figures do not correspond to actual dimensions or dimension ratios. Moreover, it should be noted that, in the figures, structural and/or functional elements which are common to different embodiments may have the same reference sign. Thus, unless otherwise stated, these elements have structural, dimensional and material properties which are identical.

### -- DETAILED DESCRIPTION OF THE INVENTION --

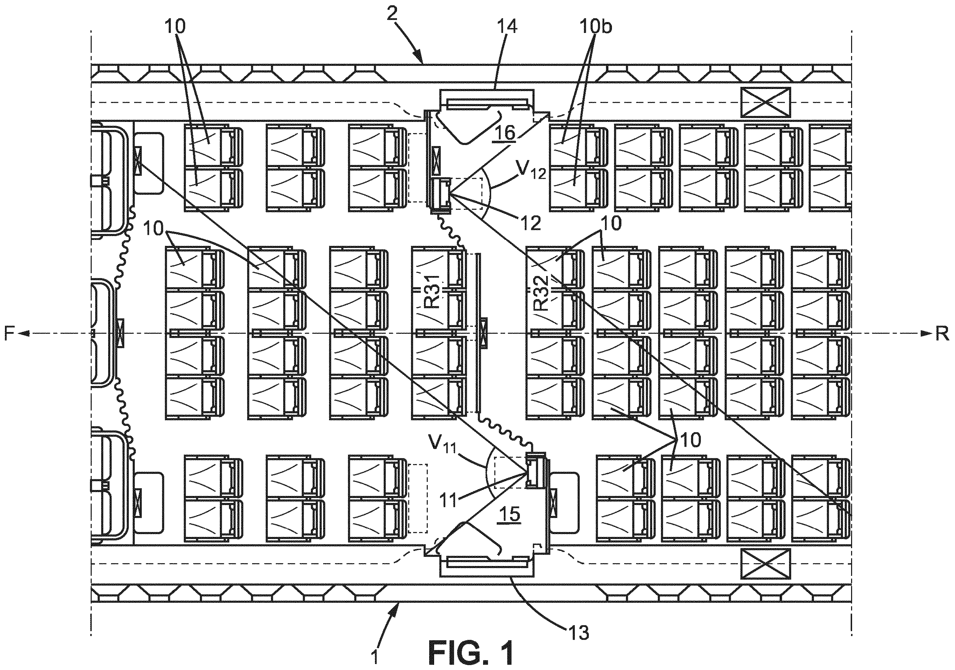

Figure 1 shows a cabin layout of an intermediate part of an aircraft cabin, in particular for passenger transportation. In the shown example, the aircraft cabin may include two lateral sides 1 and 2, i.e. left and right sides 1 and 2 while considering a longitudinal direction of the aircraft, and at least one intermediate access area 15, particularly two intermediate access areas 15 and 16, to at least one lateral intermediate aircraft door 13, particularly two lateral intermediate aircraft doors 13 and 14, and more specifically two lateral intermediate emergency doors 13 and 14. According to a particular example, lateral intermediate aircraft doors 13 and 14 are respectively arranged on the aircraft sides 1 and 2.

In addition, the aircraft cabin may include at least a passenger seat 10. It may also comprise at least a first crew attendant seat 11 which is located in the intermediate access area 15. Particularly, the first crew attendant seat 11 is oriented such that a crew member seated thereon faces in an aircraft front direction F.

But as this appears on figure 1, passenger seats 10 have been removed on the aircraft side 1, from seat rows R31 and R32 according to the shown example, which are in line with the intermediate access area 15 and the crew attendant seat 11 and perpendicular to the longitudinal direction of the aircraft, to have such first crew attendant seat 11 installed.

A second crew attendant seat 12 may be located in another intermediate access area 16. Particularly, the second crew attendant seat 12 is oriented such that a crew member seated thereon faces in an aircraft rear direction R. Similarly, passenger seats 10 have been removed on the aircraft side 2, from seat rows R31 according to the shown example, which are in line with the intermediate access area 16 and crew attendant seat 12 and perpendicular to a longitudinal direction of the aircraft, to have such second crew attendant seat 12 installed.

In the cabin layout of figure 1, the locations and orientations of both crew attendant seats 11 and 12, facing in the aircraft front direction F for the first crew attendant seat 11 and facing in the aircraft rear direction R for the second crew attendant seat 12, allow two crew attendants who are on respective crew attendant seats 11 and 12 to monitor simultaneously through direct vision passenger seats 10 in opposite directions, namely the aircraft front direction F and the aircraft rear direction R.

The fields of view thus available for both crew attendants are denoted V₁₁ and V₁₂ respectively. The crew attendant seats 11 and 12 are located such that the fields of view V₁₁ and V₁₂ meet the regulation requirement of at least 50% of the passenger seats 10 in the cabin areas concerned to be visible for the crew attendants.

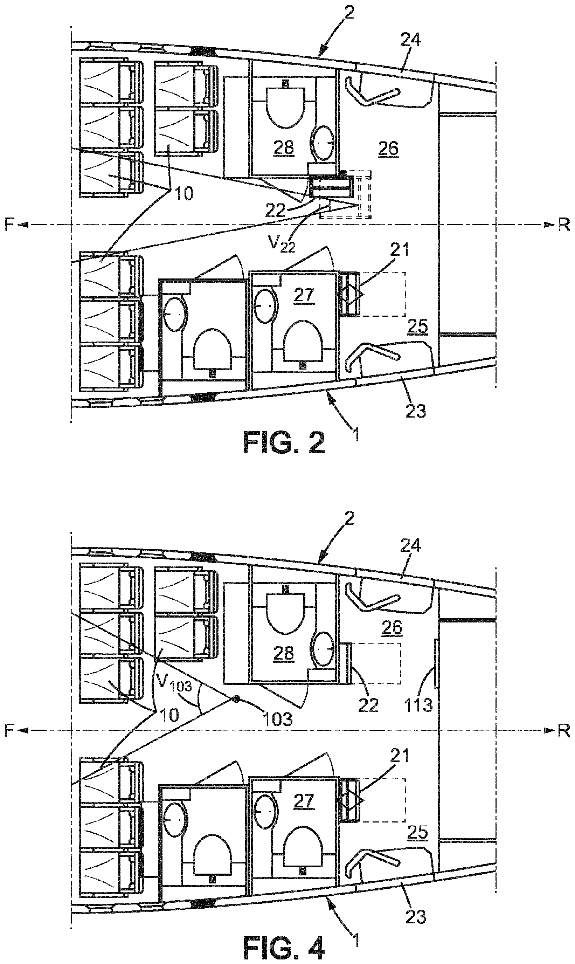

Figure 2 shows another cabin layout for a rear part of an aircraft cabin, in particular for passenger transportation. In the shown example, the aircraft cabin may include at least one rear access area 25, particularly two rear access areas 25 and 26, to at least one lateral rear aircraft door 23, particularly two lateral rear aircraft doors 23 and 24, and more specifically two lateral rear aircraft exit doors 23 and 24. According to a particular example, lateral rear aircraft doors 23 and 24 are respectively arranged on the aircraft sides 1 and 2.

In addition, the aircraft cabin may include one lavatory module 27, particularly two lavatory modules 27 and 28. The lavatory module 27, respectively lavatory modules 27 and 28, is also located in the rear part of the aircraft cabin, close the rear access area 25 and/or the rear access area 26. According to a particular example, the lavatory modules 27 and 28 are shifted in the aircraft front direction F with respect to these access areas 25 and 26.

A rear crew attendant seat 22 may be secured to a bulkhead portion of the lavatory module 28. In such arrangement, the rear crew attendant seat 22 is in a longitudinal aisle of the aircraft such that a crew member seated thereon faces in the aircraft front direction F.

However, for allowing free passage from the aisle to the rear access areas 25 and 26, the rear crew attendant seat 22 has to be mounted on a mobile system so that the rear crew attendant seat 22 can be stowed. Specifically, such mobile system may allow rotation of a backrest part of the rear crew attendant seat 22 about a vertical rotation axis, and also rotation of the rear crew attendant seat 22 about a horizontal rotation axis. Such mobile system is complex and heavy, although the crew attendant seat 22 is used only during the critical phases.

In the layout of figure 2, the location and orientation of the rear crew attendant seat 22, when in use, allow a crew attendant who is sitting to monitor the passenger seats 10 which are close to the aisle on both sides, through direct vision in the aircraft front direction F according to a corresponding field of view V₂₂ from the rear crew attendant seat 22.

In addition, another rear crew attendant seat 21 may be secured to a bulkhead portion of the lavatory module 27, in the access area 25 such that a crew member seated thereon faces in an aircraft rear direction R.

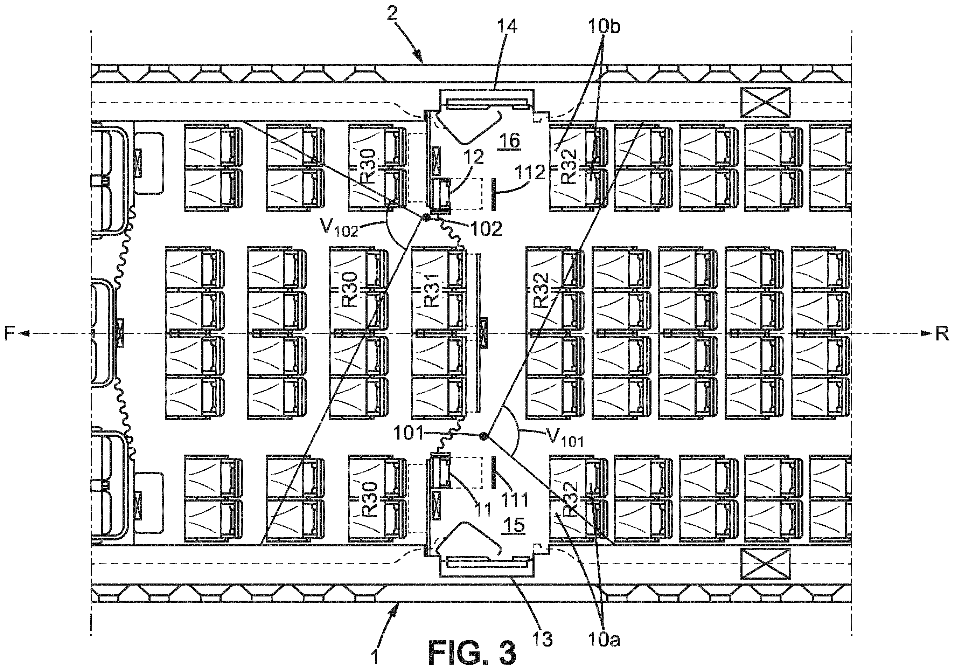

Figure 3 shows an alternative embodiment of figure 1 in which the arrangement of the intermediate access area 15 on the aircraft side 1 has been modified according to the invention, particularly so as to be symmetrical of that of the intermediate access area 16 on the aircraft side 2, with respect to the longitudinal aircraft axis.

This intermediate access area 16 on the aircraft side 2 may have the same arrangement as in figure 1. In this way, both crew attendant seats 11 and 12 are facing in the aircraft rear direction R. Such arrangement ensures an improved safety to the sitting crew attendants, in particular in case of sudden slowing down of the aircraft.

Additionally, such arrangement according to the invention allows adding two passenger seats 10a on the side of the access area 15 facing the crew attendant seat 11, in a similar way to the crew attendant seat 12 and passenger seats 10b on the access area 16. Put another way, passenger seat rows R30 and R32 according to the shown example are complete across the full width of the aircraft cabin. Two passenger seats are missing only for row R31 on both aircraft sides 1 and 2 according to the shown example.

As shown on figure 3, at least one video camera 101, advantageously several video cameras 101 and 102, are depicted for showing exemplary locations and orientations thereof. Therefore, respective fields of view V₁₀₁ and V₁₀₂ of these video cameras 101 and 102 encompass at least 50% of the passenger seats 10 of the cabin area concerned.

Thanks to the invention, the video cameras 101 and 102 can be oriented such that respective fields of view V₁₀₁ and V₁₀₂ are in opposite directions. As an example, the video camera 101 is oriented toward the aircraft rear direction R and the video camera 102 is oriented toward the aircraft front direction F, independently of the orientations of the crew attendant seats 11 and 12.

In addition, at least one video display device 111, advantageously several video display devices 111 and 112, is arranged in such way that it can display images from acquisition data that are provided by the video cameras 101 and 102. The video display device 111, respectively video display devices 111 and 112, is located and oriented so as to be observed by the crew attendants sitting on the crew attendant seats 11 and/or 12 or being in the area where on the crew attendant seat 11 and/or 12 is located.

The locations and orientations represented for the video cameras 101 and 102 and for the video display devices 111 and 112 are provided only for illustrative purpose and the one skilled in aircraft cabin design will appreciate the invention benefits when designing an aircraft cabin. In particular, the video cameras 101 and 102 may be mounted at a ceiling level of the cabin. Similarly, the video display devices 111 and 112 are secured to the cabin ceiling.

Also, acquisition data which are provided by the video cameras 101 and 102 may be processed and transformed into at least one image data by a processing unit (not shown), and the image data may be transmitted to the video display devices 111 and 112 for being displayed.

Figure 4 shows an alternative embodiment of figure 2 in which the rear crew attendant seat 22 is now secured to a bulkhead portion of the lavatory module 28 in the access area 26. In this way, the passage is increased in the aisle to reach the access area 26.

Additionally, it is no longer necessary for the crew attendant seat 22 to be mounted on a heavy and complex mobile system. Indeed, the backrest part of the crew attendant seat 22 is fixedly secured to the bulkhead portion of the lavatory module 28. In additional, the seat part of the crew attendant seat 22 is mounted so as to be rotatable about a horizontal rotation axis between a vertical stowed position and a horizontal use position.

In the use position, the seat part extends in the access area 26. Because the crew attendant seat 22, as relocated thanks to the invention, is arranged such that a crew member seated thereon faces in the aircraft rear direction R, safety is improved for a crew attendant who is sitting on it, in particular in case of sudden slowing down of the aircraft. The other rear crew attendant seat 21 may remain unchanged from the layout shown in figure 2.

In addition, the direct vision to the aisle by the crew attendant who is sitting on the crew attendant seat 22 as shown in figure 2, with field of view V₂₂, may be replaced in the layout of figure 4 by at least one rear video camera 103, with field of view V₁₀₃ encompassing the aisle, which is coupled to at least one video display device 113. The video display device 113 is fixedly located in front of the rear crew attendant seat 22, on the side of the access area 26 opposite the rear crew attendant seat 22, so that it can be viewed clearly by the crew attendant seated thereon.

In a particular example not forming part of the presently claimed invention, rear crew attendant seats 21 and 22 may be removed from the rear part of the aircraft cabin. In such arrangement, the rear part of the aircraft may only include aircraft monument assemblies, such as lavatory modules 27 and 28, and crew attendants are no longer to be seated in the rear part of the aircraft cabin during the critical phases of the flight, including taxiing, take-off and landing phases.

Indeed, thanks to the rear video camera 103, the acquisition of data is possible and may be processed and transformed by a processing unit (not shown) into at least one image data which may be transmitted to a video display device located anywhere else in the aircraft cabin, where at least one crew attendant seat is mounted and/or where a crew attendant can have access and see this video display device.

The invention can be reproduced with many adaptations depending on the aircraft type in particular. But in all cases, it makes easier designing monument assemblies for aircraft which provide improved comfort for the passengers, increased number of passenger seats, and/or reduced weight, in particular weight contribution due to the crew attendant seats, while maintaining fulfilment of the safety requirements.

Changes and modifications, additions and deletions, combinations of different embodiments here above described may be made to the structures and methods recited above and shown in the drawings without departing from the scope of the disclosure, as defined by the following claims.

## Claims

1. Aircraft cabin comprising a monument assembly fitted into the aircraft cabin for forming an aircraft cabin layout with respect to an aircraft front direction (F) and an aircraft rear direction (R), the monument assembly comprising at least one **crew attendant seat** (11, 12, 21, 22) which is secured to the monument assembly,
wherein the aircraft cabin comprises two **access areas** (15, 16, 25, 26) to respective lateral aircraft doors (13, 14, 23, 24) which are located respectively on left and right sides (1, 2) on the aircraft cabin for forming an intermediate or rear part of the aircraft cabin layout,
the monument assembly comprising at least one bulkhead portion which forms a limit of the corresponding access area (15, 16, 25, 26) in the aircraft front direction (F),
wherein the **crew attendant seat** has a seat **backrest** rigidly secured to the bulkhead portion of the monument assembly, and the crew attendant seat has a **seat** part pivotally connected to the bulkhead portion so that this seat part rotates about a horizontal rotation axis between a vertical stowed position and a horizontal use position, wherein the **crew attendant seat** faces in the aircraft rear direction (R) and extends, when in use position, at least partly into the corresponding access area (15, 16, 25, 26), and wherein the crew attendant seat (11, 12, 21, 22) is arranged so that it does not allow a crew attendant seated thereon to monitor at least a part of passenger seats (10) within a zone or cabin area of the aircraft cabin through direct vision,
and wherein the aircraft cabin comprises at least one cabin monitoring system which includes at least one capturing device (101, 102, 103) positioned and oriented within the aircraft cabin, so that it allows monitoring of said part of the passenger seats (10) within the zone or cabin area of the aircraft cabin, the cabin monitoring system including at least one video display device (111, 112, 113) configured to display at least one image data that is produced from acquisition data provided by the at least one capturing device, so that it can be viewed clearly by the crew attendant seated on said crew attendant seat,
**characterized in that** the at least one **video display device** (111 112, 113) is **fixedly located** in front of the crew attendant seat, on the side of the access area **opposite the crew attendant seat** forming the rear part of the aircraft cabin layout, or secured to the cabin ceiling in the access area forming the intermediate part of the aircraft cabin layout.

2. Aircraft cabin according to Claim 1, wherein each access area (15, 16, 25, 26) to the lateral aircraft door (13, 14, 23, 24) is comprised between two complete rows (R30, R32) of passenger seats (10) which respectively extends over a full width of the aircraft cabin.

3. Aircraft cabin according to claim 1 or 2, wherein the capturing device (101, 102, 103) comprises at least one amongst a visible range video camera, a near-infrared video camera, a thermal camera, a 3D-acquisition sensor set, and/or a laser scanning device.

4. Aircraft cabin according to any preceding claims, wherein the monument assembly is arranged at an **intermediate** part of the aircraft cabin layout.

5. Aircraft cabin according to any of preceding claims 1-3, wherein the monument assembly is arranged at a **rear** part of the aircraft cabin layout, and the monument assembly includes at least one **lavatory module** (27, 28).

6. Aircraft cabin according to claim 1, wherein the bulkhead portion is perpendicular to a longitudinal aircraft direction.

7. Aircraft cabin according to claim 5, wherein the bulkhead portion is part of the la**vatory module** (27, 28).

8. Aircraft cabin according to claim 2, wherein only one passenger seat row (R31) is incomplete with respect to the full width of the aircraft cabin and which is intermediate between said complete rows of passenger seats.

## Patentansprüche

1. Flugzeugkabine mit einer Modulanordnung, die in die Flugzeugkabine eingepasst ist, um einen Flugzeugkabinenaufbau in Bezug auf eine Flugzeugfrontrichtung (F) und eine Flugzeugheckrichtung (R) zu bilden, wobei die Modulanordnung zumindest einen Flugbegleitersitz (11, 12, 21, 22) enthält, der an die Modulanordnung befestigt ist,
wobei die Flugzeugkabine zwei Zugangsbereiche (15, 16, 25, 26) zu jeweiligen seitlichen Flugzeugtüren (13, 14, 23, 24) umfasst, die sich auf der linken bzw. rechten Seite (1, 2) der Flugzeugkabine befinden, um einen Zwischen- oder Hinterabschnitt des Flugzeugkabinenaufbaus zu bilden, wobei die Modulanordnung zumindest einen Trennwandabschnitt umfasst, der eine Begrenzung des entsprechenden Zugangsbereichs (15, 16, 25, 26) in Flugzeugfrontrichtung (F) bildet,
wobei der Flugbegleitersitz eine Sitz-Rückenlehne aufweist, die starr an den Trennwandabschnitt der Modulanordnung befestigt ist, und wobei der Flugbegleitersitz ein Sitzteil aufweist, das mit dem Trennwandabschnitt schwenkbar verbunden ist, so dass dieses Sitzteil um eine horizontale Drehachse zwischen einer vertikalen Verstauposition und einer horizontalen Gebrauchsposition verschwenkbar ist, wobei der Flugbegleitersitz in Flugzeugheckrichtung (R) weist und in Gebrauchsposition zumindest teilweise in den entsprechenden Zugangsbereich (15, 16, 25, 26) hineinragt und wobei der Flugbegleitersitz (11, 12, 21, 22) so angeordnet ist, dass es einem darauf sitzenden Besatzungsmitglied nicht möglich ist, zumindest einen Teil der Passagiersitze (10) innerhalb einer Zone oder eines Kabinenbereichs der Flugzeugkabine durch direkte Einsicht zu überwachen,
und wobei die Flugzeugkabine zumindest ein Kabinenüberwachungssystem umfasst, das zumindest eine Erfassungsvorrichtung (101, 102, 103) aufweist, die innerhalb der Flugzeugkabine so positioniert und ausgerichtet ist, dass sie die Überwachung des genannten Teils der Passagiersitze (10) innerhalb der Zone oder des Kabinenbereichs der Flugzeugkabine ermöglicht, wobei das Kabinenüberwachungssystem zumindest eine Videoanzeigevorrichtung (111, 112, 113) umfasst, die dazu ausgelegt ist, zumindest ein Bild, das aus von der zumindest einen Erfassungsvorrichtung bereitgestellten Erfassungsdaten erzeugt wird, so anzuzeigen, dass es von dem auf dem genannten Flugbegleitersitz sitzenden Besatzungsmitglied deutlich eingesehen werden kann,
**dadurch gekennzeichnet, dass** die zumindest eine Videoanzeigevorrichtung (111, 112, 113) fest vor dem Flugbegleitersitz auf der dem Flugbegleitersitz gegenüberliegenden Seite des Zugangsbereichs, der den Hinterabschnitt des Flugzeugkabinenaufbaus bildet, angeordnet oder an der Kabinendecke in dem Zugangsbereich, der den Zwischenabschnitt des Flugzeugkabinenaufbaus bildet, befestigt ist.

2. Flugzeugkabine nach Anspruch 1,
wobei jeder Zugangsbereich (15, 16, 25, 26) zur seitlichen Flugzeugtür (13, 14, 23, 24) zwischen zwei vollständigen Reihen (R30, R32) von Passagiersitzen (10) liegt, die sich jeweils über eine volle Breite der Flugzeugkabine erstrecken.

3. Flugzeugkabine nach Anspruch 1 oder 2,
wobei die Erfassungsvorrichtung (101, 102, 103) zumindest eine der folgenden Einrichtungen umfasst: eine Sichtbereichs-Videokamera, eine Videokamera für den nahen Infrarotbereich, eine Wärmebildkamera, eine 3D-Erfassungssensoreinheit und/oder eine Laserscanvorrichtung.

4. Flugzeugkabine nach einem der vorhergehenden Ansprüche,
wobei die Modulanordnung an einem Zwischenabschnitt des Flugzeugkabinenaufbaus angeordnet ist.

5. Flugzeugkabine nach einem der vorangehenden Ansprüche 1 bis 3,
wobei die Modulanordnung an einem Hinterabschnitt des Flugzeugkabinenaufbaus angeordnet ist und die Modulanordnung zumindest ein Toilettenmodul (27, 28) umfasst.

6. Flugzeugkabine nach Anspruch 1,
wobei der Trennwandabschnitt senkrecht zu einer Flugzeuglängsrichtung verläuft.

7. Flugzeugkabine nach Anspruch 5,
wobei der Trennwandabschnitt Teil des Toilettenmoduls (27, 28) ist.

8. Flugzeugkabine nach Anspruch 2,
wobei nur eine Passagiersitzreihe (R31) in Bezug auf die volle Breite der Flugzeugkabine unvollständig ist und zwischen den vollständigen Passagiersitzreihen liegt.

## Revendications

1. Cabine d'aéronef comprenant un ensemble de structure installé dans la cabine d'aéronef pour former une disposition de cabine d'aéronef par rapport à une direction avant d'aéronef (F) et une direction arrière d'aéronef (R), l'ensemble de structure comprenant au moins un siège de membre d'équipage (11, 12, 21, 22) qui est fixé à l'ensemble de structure,
dans laquelle la cabine d'aéronef comprend deux secteurs d'accès (15, 16, 25, 26) à des portes d'aéronef latérales (13, 14, 23, 24) respectives qui sont situées respectivement sur des côtés gauche et droit (1, 2) sur la cabine d'aéronef pour former une partie intermédiaire ou arrière de la disposition de cabine d'aéronef, l'ensemble de structure comprenant au moins une portion de cloison qui forme une limite du secteur d'accès (15, 16, 25, 26) correspondant dans la direction avant d'aéronef (F),
dans laquelle le siège de membre d'équipage a un dossier de siège fixé de manière rigide à la portion de cloison de l'ensemble de structure, et le siège de membre d'équipage a une partie de siège reliée de manière pivotante à la portion de cloison de sorte que cette partie de siège tourne autour d'un axe de rotation horizontal entre une position pliée verticale et une position d'utilisation horizontale, dans laquelle le siège de membre d'équipage fait face à la direction arrière d'aéronef (R) et s'étend, lorsqu'il est dans la position d'utilisation, au moins en partie dans le secteur d'accès (15, 16, 25, 26) correspondant, et dans laquelle le siège de membre d'équipage (11, 12, 21, 22) est agencé de sorte qu'il ne permette pas à un membre d'équipage assis sur celui-ci de surveiller au moins une partie de sièges passagers (10) dans une zone ou un secteur de cabine de la cabine d'aéronef par le biais d'une vision directe,
et dans laquelle la cabine d'aéronef comprend au moins un système de surveillance de cabine qui comporte au moins un dispositif de capture (101, 102, 103) positionné et orienté dans la cabine d'aéronef, de sorte qu'il permette la surveillance de ladite partie des sièges passagers (10) dans la zone ou le secteur de cabine de la cabine d'aéronef, le système de surveillance de cabine comportant au moins un dispositif d'affichage vidéo (111, 112, 113) configuré pour afficher au moins une donnée d'image qui est produite à partir de données d'acquisition fournies par l'au moins un dispositif de capture, de sorte qu'elle puisse être vue clairement par le membre d'équipage assis sur ledit siège de membre d'équipage,
**caractérisée en ce que** l'au moins un dispositif d'affichage vidéo (111, 112, 113) est situé de manière fixe devant le siège de membre d'équipage, sur le côté du secteur d'accès à l'opposé du siège de membre d'équipage formant la partie arrière de la disposition de cabine d'aéronef, ou fixé au plafond de cabine dans le secteur d'accès formant la partie intermédiaire de la disposition de cabine d'aéronef.

2. Cabine d'aéronef selon la revendication 1, dans laquelle chaque secteur d'accès (15, 16, 25, 26) à la porte d'aéronef latérale (13, 14, 23, 24) est compris entre deux rangées (R30, R32) complètes de sièges passagers (10) qui s'étendent respectivement sur une largeur totale de la cabine d'aéronef.

3. Cabine d'aéronef selon la revendication 1 ou 2, dans laquelle le dispositif de capture (101, 102, 103) comprend au moins un parmi une caméra vidéo du domaine du visible, une caméra vidéo infrarouge, une caméra thermique, un ensemble de capteurs d'acquisition 3D et/ou un dispositif à balayage laser.

4. Cabine d'aéronef selon une quelconque revendication précédente, dans laquelle l'ensemble de structure est agencé au niveau d'une partie intermédiaire de la disposition de cabine d'aéronef.

5. Cabine d'aéronef selon l'une quelconque des revendications précédentes 1 à 3, dans laquelle l'ensemble de structure est agencé au niveau d'une partie arrière de la disposition de cabine d'aéronef, et l'ensemble de structure comporte au moins un module de toilettes (27, 28).

6. Cabine d'aéronef selon la revendication 1, dans laquelle la portion de cloison est perpendiculaire à une direction d'aéronef longitudinale.

7. Cabine d'aéronef selon la revendication 5, dans laquelle la portion de cloison fait partie du module de toilettes (27, 28).

8. Cabine d'aéronef selon la revendication 2, dans laquelle seule une rangée (R31) de sièges passagers est incomplète par rapport à la largeur totale de la cabine d'aéronef et est intermédiaire entre lesdites rangées complètes de sièges passagers.
